# EUROPÄISCHE PATENTSCHRIFT

(11) **EP 0 722 948 B1**
(45) Veröffentlichungstag und Bekanntmachung des Hinweises auf die Patenterteilung: **11.04.2001**
(21) Anmeldenummer: 96100152.6
(22) Anmeldetag: 08.01.1996
(51) Int. Cl.: C07F 9/40

(54) **Verfahren zur Herstellung von Vinylphosphonsäuredimethylester aus 2-Acetoxyethanphosphonäuredimethylester**
Process for the preparation of vinylphosphonic acid dimethyl ester from 2-acetoxyethanephosphonic acid dimethyl ester
Procédé de préparation de l'ester diméthylique de l'acide vinyl phosphonique à partir de l'ester diméthylique de l'acide acétoxy-2-éthane phosphonique

(30) Priorität: 18.01.1995 DE 19501336
(43) Veröffentlichungstag der Anmeldung: 24.07.1996
(73) Patentinhaber: Clariant GmbH, 65929 Frankfurt am Main (DE)
(72) Erfinder: Riedel, Knut, Dr., D-65719 Hofheim (DE); Dettmeier, Udo, Dr., D-65779 Kelkheim (DE); Roscher, Günter, Dr., D-65779 Kelkheim (DE)

(56) Entgegenhaltungen:
- EP-A- 0 032 663
- EP-A- 0 281 122
- CHEMICAL ABSTRACTS, vol. 078, no. 5, 5.Februar 1973 Columbus, Ohio, US; abstract no. 029900, YAMAGAMI M ET AL: ".gamma.-Induced addition of dialkyl phosphites to olefins and pyrolysis of the 1:1 adducts" XP002000960 & NIPPON KAGAKU KAISHI (NKAKB8);72; (10); PP.1991-3, RADIAT. CENT. OSAKA PREFECT.;DEP. CHEM.; SAKAI; JAPAN,

## Beschreibung

Die Erfindung betrifft ein Verfahren zur Herstellung von Vinylphosphonsäuredimethylester aus 2-Acetoxyethanphosphonsäuredimethylester.

Vinylphosphonsäuredialkylester sind als Vorprodukte für die Herstellung reiner Vinylphosphonsäure sowie als Monomere zur Mischpolymerisation für die Herstellung von Klebstoffen oder flammfesten Kunststoffen von Bedeutung. Die Darstellung von Vinylphosphonsäurederivaten aus den entsprechenden 2-Acetoxyethanphosphonsäurederivaten ist bekannt. M. Yamagami et al. haben Vinylphosphonsäuredimethylester durch Abspaltung von Essig in der Gasphase bei 550°C in 52%iger Ausbeute erhalten. Nach dem Verfahren der DE-OS 30 01 894 werden durch Erhitzen von 2-Acetoxyethanphosphonsäuredialkylestern in Gegenwart saurer oder basischer Katalysatoren auf 150 bis 270°C Alkylacetate abgespalten. Das Verfahren liefert Vinylphosphonsäurederivate in 70 bis 85%iger Ausbeute, allerdings entstehen immer Gemische von Vinylphosphonsäurederivaten, die neben Vinylphosphonsäuremonoalkylestern und mehreren anderen Produkten auch unterschiedliche Mengen (im Höchstfall 23 %) Vinylphosphonsäuredialkylester enthalten.

Im Hinblick auf diese unbefriedigenden Ergebnisse ist man gemäß DE-OS 31 20 437 zu einem verbesserten Zweistufenverfahren übergegangen, indem man das bei der vorgenannten Reaktion abgespaltene Alkylacetat abdestilliert und das im Sumpf erhaltene Reaktionsprodukt anschließend mit Carbonsäure-orthoestern zu den gewünschten Vinylphosphonsäuredialkylestern umgesetzt hat. In der EP 0 032 663 wird ein Verfahren beschrieben, in dem die Essigabspaltung in homogener Flüssigphase durch saure oder basische Katalysatoren beschleunigt wird. Mit diesem Verfahren gelingt es, gezielt Vinylphosphonsäuredialkylester herzustellen und so den Einsatz der teuren Orthoester zu vermeiden. Die Ausbeute beträgt jedoch nur 80 %. Außerdem läßt dieses Verfahren in verfahrenstechnischer Hinsicht zu wünschen übrig, da die Verfahrensprodukte permanent über Vakuum abdestilliert werden müssen, die Raum-Zeit-Ausbeuten geringer sind und der Katalysatorsumpf nach einiger Zeit regeneriert werden muß. Die Patentschrift EP 0 456 049 A1 beschreibt ein Verfahren, das diese Nachteile beseitigen soll. Bei diesem Verfahren werden die 2-Acetoxyethanphosphonsäure-di-alkylester gasförmig über saure oder basische Katalysatoren geleitet. Dabei entsteht jedoch wieder ein Gemisch aus Vinylphosphonsäure, -monoalkylester und -dialkylester, die wegen der starken Neigung zur Polymerisation nur sehr schwer destillativ zu trennen sind und vor allem lassen sich nur sehr kurze Katalysatorstandzeiten erreichen. Nach ganz kurzer Zeit verstopft der Reaktor und muß umständlich gereinigt und neu mit Katalysator beschickt werden.

Es bestand daher der Bedarf nach einem Verfahren, das technisch einfach durchzuführen ist und Vinylphosphonsäuredimethylester mit hoher Selektivität und Raum-Zeit-Ausbeute herzustellen gestattet.

Diese Aufgabe wird gelöst durch ein Verfahren zur Herstellung von Vinylphosphonsäuredimethylester durch thermische Spaltung von 2-Acetoxyethanphosphonsäuredimethylester in der Gasphase, dadurch gekennzeichnet, daß man 2-Acetoxyethanphosphonsäuredimethylester verdampft und unkatalysiert bei Temperaturen von 400 bis 700°C in Vinylphosphonsäuredimethylester und Essigsäure spaltet.

Die Ausgangsverbindung 2-Acetoxyethanphosphonsäuredimethylester kann leicht durch die Umsetzung von Dimethylphosphit mit Vinylacetat in Gegenwart von Peroxiden (JACS 79, 1961-63, 1957) erhalten werden. Sie wird in einem Verdampfer verdampft und gasförmig, eventuell mit Inertgas vermischt, durch die Reaktionszone geleitet. Als besonders vorteilhaft hat sich der Zusatz von 1 bis 100 Gew.-%, bevorzugt 5 bis 20 Gew.-%, Methanol zum Reaktionsgemisch erwiesen. Der Zusatz unterbindet die Bildung von hochsiedenden Nebenprodukten bei Temperaturen oberhalb 600°. Die Reaktionszone kann aus einem leeren Rohr oder einem mit einem inerten Material, z.B. Edelstahlfüllkörper, wie man sie zur fraktionierten Destillation benutzt, gefüllten Rohr bestehen.

Das Verdampfen kann unter vermindertem Druck und/oder in einem Gasstrom erfolgen. Günstig ist ein Druckbereich von 5 bis 500 mbar, insbesondere 10 bis 50 mbar. Durch Zugabenmenge und/oder Gasstrom wird eine Verweilzeit von 0,05 sec. bis zu 20 sec., bevorzugt 0,3 sec. bis 3 sec., eingestellt. Die Temperatur in der Reaktionszone liegt zwischen 400 und 700°C, bevorzugt zwischen 550 und 650°C. Es ist auch möglich bei einem Druck über 500 mbar zu arbeiten, wobei die Differenz zwischen dem Gesamtdruck und dem Partialdruck der Reaktionskomponenten durch ein unter den Reaktionsbedingungen inertes Gas erzeugt wird. Als Inertgas kann N₂, He, Ar, CO₂ aber auch der Dampf niederer Kohlenwasserstoffe wie Hexan, Heptan oder Toluol verwendet werden.
Besonders günstig ist der Zusatz von Methanol.
Nach dem Verlassen der Reaktionszone wird das Reaktionsgemisch abgekühlt und analysiert.

Folgende Beispiele sollen das erfindungsgemäße Verfahren verdeutlichen, ohne es darauf zu beschränken.

### Beispiel 1

In dem 180°C heißen Verdampfer werden bei 40 mbar 104,5 g 2-Acetoxyethanphosphonsäuredimethylester pro Stunde verdampft. Der Dampf wird zusammen mit 4,17 cm³/s N₂ (15NI N₂ pro Stunde) durch ein 550°C heißes Rohr geleitet. Die Verweilzeit im Reaktor beträgt 0,5 sec. Nach der Kondensation erhält man ein Gemisch aus 13,2 % Essig, 30,6 % Vinylphosphonsäuredimethylester und 55 % Ausgangsverbindung. Die Selektivität beträgt 98 %.

### Beispiel 2

In dem 180°C heißen Verdampfer werden bei 30 mbar 149 g 2-Acetoxyethanphosphonsäuredimethylester pro Stunde verdampft. Der Dampf wird zusammen mit 0,97 cm³/s He (3,5 NI He pro Stunde) durch ein 650°C heißes Rohr, gefüllt mit Braunschweiger-VA-Wendeln, geleitet. Die Verweilzeit im Reaktor beträgt 0,45 sec. Nach der Kondensation erhält man ein Gemisch aus 28,8 % Essig, 68 % Vinylphosphonsäuredimethylester und 0,1 % Ausgangsverbindung. Die Selektivität beträgt 98 %.

### Beispiel 3

In dem 180°C heißen Verdampfer werden bei 100 mbar 80 g 2-Acetoxyethanphosphonsäuredimethylester pro Stunde verdampft. Der Dampf wird zusammen mit 0.69 cm³/s N₂ (2,5 NI N₂ pro Stunde) durch ein 550°C heißes Rohr geleitet. Die Verweilzeit im Reaktor beträgt 2,8 sec. Nach der Kondensation erhält man ein Gemisch aus 27,9 % Essig, 61,5 % Vinylphosphonsäuredimethylester und 8,6 % Ausgangsverbindung. Die Selektivität beträgt 97 %.

### Beispiel 4

In einem 180°C heißen Verdampfer werden bei 30 mbar 134,1 g 2-Acetoxyethanphosphonsäuredimethylester und 14,9 g Methanol pro Stunde verdampft. Der Dampf wird zusammen mit 0.97 cm³/s N₂ (3,5 NI N₂ pro Stunde)durch ein 650°C heißes Rohr geleitet. Die Verweilzeit beträgt 0,35 sec. Nach der Kondensation erhält man ein Gemisch aus 26,2 % Essig, 62,6 % Vinylphosphonsäuredimethylester, 9,4 % Methanol, 1,7 % Methylacetat und 0,1 % Ausgangsverbindung. Die Selektivität beträgt über 99 %.

## Patentansprüche

1. Verfahren zur Herstellung von Vinylphosphonsäuredimethylester durch thermische Spaltung von 2-Acetoxyethanphosphonsäuredimethylester in der Gasphase, dadurch gekennzeichnet, daß man 2-Acetoxyethanphosphonsäuredimethylester verdampft und unkatalysiert bei Temperaturen von 400 bis 700°C in Vinylphosphonsäuredimethylester und Essigsäure spaltet.

2. Verfahren nach Anspruch 1, dadurch gekennzeichnet, daß die Reaktion bei vermindertem Druck durchgeführt wird.

3. Verfahren nach Anspruch 1, dadurch gekennzeichnet, daß man bei einem Druck über 500 mbar arbeitet, wobei die Differenz zwischen dem Gesamtdruck und dem Partialdruck der Reaktionskomponenten durch ein unter den Reaktionsbedingungen inertes Gas erzeugt wird.

4. Verfahren nach mindestens einem der Ansprüche 1 bis 3, dadurch gekennzeichnet, daß bei einer Temperatur von 550 bis 650°C gearbeitet wird.

5. Verfahren nach mindestens einem der Ansprüche 1 bis 4, dadurch gekennzeichnet, daß die Spaltprodukte kontinuierlich aus der Reaktionszone abgeführt werden.

6. Verfahren nach mindestens einem der Ansprüche 1 bis 5, dadurch gekennzeichnet, daß die Verweilzeit 0,05 bis 20 Sekunden, beträgt.

7. Verfahren nach mindestens einem der Ansprüche 1 bis 6, dadurch gekennzeichnet, daß man dem 2-Acetoxyethanphosphonsäuredimethylester 1 bis 100 Gew.-% Methanol zusetzt.

8. Verfahren nach Anspruch 1 oder 2, dadurch gekennzeichnet, daß die Reaktion bei 10 bis 50 mbar durchgeführt wird.

9. Verfahren nach mindestens einem der Ansprüche 1 bis 6, dadurch gekennzeichnet, daß die Verweilzeit 0,3 bis 3 Sekunden beträgt.

10. Verfahren nach mindestens einem der Ansprüche 1 bis 9, dadurch gekennzeichnet, daß man dem 2-Acetoxyethanphosphonsäuredimethylester 5 bis 20 Gew.-% Methanol zusetzt.

## Claims

1. A process for preparing dimethyl vinylphosphonate by thermal dissociation of dimethyl 2-acetoxyethanephosphonate in the gas phase, which comprises vaporizing dimethyl 2-acetoxyethanephosphonate and dissociating it without catalysis at temperatures of from 400 to 700°C into dimethyl vinylphosphonate and acetic acid.

2. The process as claimed in claim 1, wherein the reaction is carried out at reduced pressure.

3. The process as claimed in claim 1, carried out at a pressure of above 500 mbar, with the difference between the total pressure and the partial pressure of the reaction components being produced by a gas which is inert under the reaction conditions.

4. The process as claimed in at least one of claims 1 to 3, carried out at a temperature of from 550 to 650°C.

5. The process as claimed in at least one of claims 1 to 4, wherein the dissociation products are continuously removed from the reaction zone.

6. The process as claimed in at least one of claims 1 to 5, wherein the residence time is from 0.05 to 20 seconds.

7. The process as claimed in at least one of claims 1 to 6, wherein from 1 to 100% by weight of methanol is added to the dimethyl 2-acetoxyethane-phosphonate.

8. The process as claimed in claim 1 or 2, wherein the reaction is carried out at from 10 to 50 mbar.

9. The process as claimed in at least one of claims 1 to 6, wherein the residence time is from 0.3 to 3 seconds.

10. The process as claimed in at least one of claims 1 to 9, wherein from 5 to 20% by weight of methanol is added to the dimethyl 2-acetoxyethane-phosphonate.

## Revendications

1. Procédé pour la préparation d'esters diméthyliques de l'acide vinylphosphonique par dissociation thermique d'esters diméthyliques de l'acide 2-acétoxy-éthane-phosphonique en phase gazeuse, caractérisé en ce qu'on évapore l'ester diméthylique de l'acide 2-acétoxy-éthane-phosphonique et on le dissocie sans catalyse à une température de 400 à 700°C en ester diméthylique de l'acide vinylphosphonique et en acide acétique.

2. Procédé selon la revendication 1, caractérisé en ce qu'on met en oeuvre la réaction sous pression réduite.

3. Procédé selon la revendication 1, caractérisé en ce qu'on opère sous une pression de 500 mbars, la différence entre la pression totale et la pression partielle des constituants réactionnels étant produite par un gaz inerte dans les conditions réactionnelles.

4. Procédé selon au moins l'une des revendications 1 à 3, caractérisé en ce qu'on opère à une température de 550 à 650°C.

5. Procédé selon au moins l'une des revendications 1 à 4, caractérisé en ce que les produits de dissociation sont évacués en continu de la zone réactionnelle.

6. Procédé selon au moins l'une des revendications 1 à 5, caractérisé en ce que la durée de séjour est de 0,05 à 20 secondes.

7. Procédé selon au moins l'une des revendications 1 à 6, caractérisé en ce qu'on ajoute 1 à 100 % en masse de méthanol à l'acide 2-acétoxyéthane-phosphonique.

8. Procédé selon la revendication 1 ou 2, caractérisé en ce que la réaction est mise en ouvre sous une pression de 10 à 50 mbars.

9. Procédé selon au moins l'une des revendications 1 à 6, caractérisé en ce que la durée de séjour est de 0,3 à 3 secondes.

10. Procédé selon au moins l'une des revendications 1 à 9, caractérisé en ce qu'on ajoute 5 à 20 % en masse de méthanol à l'ester diméthylique de l'acide 2-acétoxy-éthane-phosphonique.
